# EUROPEAN PATENT APPLICATION

(11) **EP 2 532 873 A1**
(43) Date of publication of application: **12.12.2012**
(21) Application number: 12171203.8
(22) Date of filing: 07.06.2012
(51) Int. Cl.: F02M 21/02, F02M 21/06, G05D 16/10

(54) **A device for feeding motors with a gaseous fuel, in particular vehicle engines**

(30) Priority: 09.06.2011 IT PC20110013
(71) Applicant: POLIAUTO di Ing. P. PARIETTI & C. s.n.c., 29121 Piacenza (IT)
(72) Inventor: Parietti, Pietro, 29121 Piacenza (IT)
(74) Representative: Fisauli, Beatrice A. M.

(57) **Abstract**

The invention relates to a device for feeding motors with a gaseous fuel, comprising a body (2) with at least one inlet (3) for a high pressure gaseous fuel and at least one outlet (4) of said fuel at low pressure, at least one valve (5) housed inside said body adapted to take the fuel from said high pressure to said low pressure, said body (2) having at least one portion with a substantially cylindrical shaped outer surface (6), at least one cylindrical sleeve (7) placed around the body (2) on said outer surface (6) in such a manner as to provide a chamber (10) for circulation of a heat-carrying fluid between said body (2) and said sleeve (7).

## Description

The present invention relates to a device for feeding motors with a gaseous fuel, in particular internal combustion engines of vehicles such as automobiles, commercial vehicles, buses and the like.

In detail, this is a pressure regulating device capable of delivering a flow of gaseous fuel, such as methane gas, LPG, biogas or the like, to the engine at a stabilized low pressure substantially insensitive to the pressure present inside the tanks or the bottles.

In more detail, this is a single-stage pressure reduction device, i.e. capable of reducing the pressure present in the bottles or in the tank to an operating value, by means of a single reduction valve.

Two main types of single-stage mechanical pressure reducers are known on the market, i.e. membrane type reducers and piston type reducers.

The former make use of the flexibility of a specific membrane, subject on one side to the thrust of the gas at a given pressure and on the other to the action of elastic means, adapted to deform and control the translation, to a greater or lesser degree, of a specific shutter of a valve that regulates the gas flow toward the engine at a pressure as constant as possible.

Similarly, the latter are instead provided with a piston, also subject to the action of the pressure of the gas on the one side and of elastic means on the other, which, similar to the previous case, moves a shutter of a valve that controls the passage of gas toward the engine.

However, theses prior art devices (in both configurations) have some limitations. One problem mainly relates to the outer dimensions of the body of the reduction device which are often excessive.

In fact, these devices are installed in the engine compartment of vehicles which, not being designed specifically to accommodate them, in the majority of cases have free spaces that are small or in any case somewhat inaccessible.

In membrane type reducers, the excessive dimensions are mostly linked to the type of mechanism. In fact, the membrane comprises a central portion on which the pressure acts, with a minimum surface to obtain good pressure regulation performances, as well as a peripheral portion that does not contribute to operation, but which enables it to be fastened to the body.

Therefore, its minimum surface cannot be decreased below a certain value.

On the other hand, piston type reducers can in general have slightly smaller outer dimensions than membrane type reducers, but are susceptible to further improvements.

In fact, in the body of these devices (also in membrane devices) a part of the volume is occupied by passages and ducts for circulation of a portion of the flow of engine coolant, which has the function of heating the body of the reducer. Following expansion in the valve a sudden decrease occurs in the gas temperature which could cause freezing and malfunction of the various moving components, especially those made of rubber, plastic or the like (membrane, gaskets, etc.).

These passages and ducts are often produced by making holes (which can be mutually communicating) in the outer layer of the body, in which said coolant is circulated at a temperature between approximately 80 °C and 110 °C.

To ensure sufficient liquid flow to adequately heat the body of the reducer, these ducts often have large diameters (even great than one centimeter in diameter), making it necessary to increase the thickness of the outer walls of the body, and consequently the dimensions of the device.

Moreover, these circular ducts are preferred as they are simple to produce (for example, by means of simple boring), but have a limited heat exchange surface and consequently a lower dissipation of thermal energy with the same occupied volume.

Devices also exist in which these ducts are produced in the walls by means of casting or molding operations.

In this way, it is possible to obtain slightly smaller dimensions with respect to the devices described above, but with a considerable increase in the costs for machining (for example, to produce molds) and for assembly (in general the body is produced in several assembled parts).

In this context, the object of the present invention is to provide a device for feeding motors with a gaseous fuel, which overcomes the drawbacks of prior art.

In detail, an object of the invention is to provide a device for feeding motors with a gaseous fuel, which enables the dimensions of the body of the device to be reduced as much as possible ,in such a manner as to facilitate placing thereof in the engine compartment of a vehicle.

A further object of the present invention is to provide a device for feeding motors with a gaseous fuel, which is simple and therefore also inexpensive to produce. Another object of the present invention is to provide a device for feeding motors with a gaseous fuel, provided with a modular body that enables the device to be adapted to different types of internal combustion engines and maintenance operations thereon to be simplified.

Yet another object is to provide a device for feeding motors with a gaseous fuel, which ensures a low output pressure which remains as constant as possible when the pressure in the bottles or in the tanks varies.

The aforesaid objects are substantially achieved by a device for feeding motors with a gaseous fuel, comprising a body with at least one inlet for a high pressure gaseous fuel and at least one outlet of said fuel at low pressure, at least one valve housed inside said body adapted to take the fuel from said high pressure to said low pressure, said body having at least one portion with a substantially cylindrical shaped outer surface, at least one cylindrical sleeve placed around the body on said outer surface in such a manner as to provide a chamber for circulation of a heat-carrying fluid between said body and said sleeve.

As a result of this configuration it is possible to create a tubular chamber with reduced thickness for circulation of the heat-carrying fluid (coolant), considerably reducing the dimensions of the device with respect to prior art devices.

Sealing means adapted to guarantee tight seal of the chamber and interlocking means adapted to constrain axial translation of the sleeve are provided between said sleeve and said body. In this way, it is possible to rotate the sleeve about the body in such a manner as to position the pipes that feed the coolant in the most appropriate position.

Moreover, said body is provided at one end with a removable cover on which the outlet for low pressure gas is produced; both the end and the cover are substantially cylindrical in shape and each is provided with a thread for mutual coupling thereof.

The cover can thus be replaced with another with a different number of outlets or with different arrangement to adapt to the various types of motors to be fed.

A filter element comprising a tubular element, containing a first filter, is placed between said body and said cover, with the ends substantially circular in shape provided with a thread to couple respectively with the end of the body and the cover.

The reduction valve is also provided with a shutter mounted on an insert placed at another end of the body in a removable manner and connected thereto by means of a thread or the like.

A second filter can also be contained in the insert which acts as inlet connector for the high pressure fuel.

In this way, replacement of the filters and of the shutter can be carried out by removing only the tubular element or the insert from the body, without disassembling the device from the engine compartment of the vehicle.

Further characteristics and advantages will be more apparent from the indicative, and therefore non-limiting, description of an example of a preferred but not exclusive embodiment of the invention, as shown in the accompanying figures wherein:
- Fig. 1 is a perspective view of the device for feeding motors with a gaseous fuel according to the invention;
- Fig. 2 is a sectional view of the device of Fig. 1;
- Figs. 3 and 4 are further perspective views of the device according to the invention, with the modular body in different configurations;
- Figs. 5 and 6 are further sectional views of the device according to the invention, with the modular body in further different configurations.

With reference to the accompanying figures, the device for feeding motors with a gaseous fuel 1 comprises a body, indicated as a whole with 2, provided with at least one inlet 3 for a high pressure fuel, coming from the tanks or from the bottles of the vehicle, and at least one outlet 4 of said fuel at a stabilized low pressure.

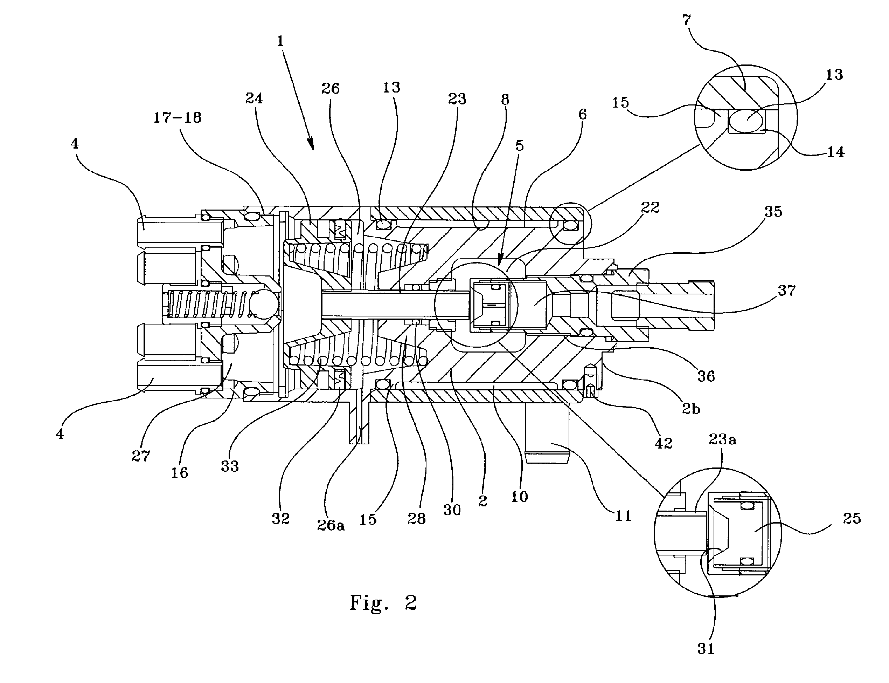

A valve, indicated as a whole with 5, is provided inside said body, adapted to reduce the pressure of said gaseous fuel, for example methane gas, LPG or biogas, to a pressure suitable to feed an internal combustion engine (Fig.2). Further accessories (such as solenoid valves, pressure gauges, etc.), better described below, can be connected at the inlet 3, while the pipes that carry the fuel toward the injectors at the correct operating pressure are connected at the outlet 4.

Preferably, said body 2 is produced in brass or stainless steel, or other metals capable of withstanding the corrosive agents present in biogases.

Brass is preferable for its good machinability, both hot and using machine tools. According to the invention, said body 2 comprises at least one portion with a substantially cylindrical shaped outer surface 6 (Fig. 2).

A sleeve 7 with an inner surface 8, also substantially cylindrical shaped, is placed around the body 2 on said surface 6, distanced from said outer surface 6 of the body 2 in such a manner as to produce therebetween a chamber 10 for circulation of a heat-carrying fluid.

Said heat-carrying fluid has the task of yielding heat to the body 2 to limit lowering of the temperature caused by expansion of the gas in the valve 5.

A portion of the flow of the coolant of the vehicle engine, which is drawn from the circuit at a temperature between 80 °C and 110 °C, is commonly used as heat-carrying fluid.

Preferably, said chamber 10 has a rectilinear tubular shape with inner and outer cylindrical surfaces defined respectively by the outer surface 6 of the body 2 and by the inner surface 8 of the sleeve 7.

As a result of this configuration, it is thus possible to considerably limit the volume of the chamber 10, and consequently the outer dimensions of the device, and at the same time obtain a large heat exchange surface between the coolant and the body 2, i.e. the whole cylindrical surface 6.

The flow of coolant is determined as a function of the volume of the chamber 10, i.e. of the area of the outer surface 6 of the body 2, and by the distance between said wall and the inner wall 8 of the sleeve 7.

This distance can be greatly reduced, even up to a minimum value of a few millimeters, i.e. such as to enable the liquid to circulate in the chamber without excessively high friction losses.

To enable feed to the chamber 10, the sleeve 7 is provided with at least a first mouth 11 for connection of a delivery pipe of said coolant, and at least a second mouth 12 for connection of a return pipe of said coolant (pipes not shown in the figure).

Preferably, sealing means adapted to guarantee tight seal of the chamber 10 and prevent leakage of the coolant are provided between said sleeve 7 and the body 2. In detail, said sealing means comprise a pair of O-rings 13 made of rubber, silicone or similar material, housed in the same number of seats 14 produced in the body 2 at the ends of the outer surface 6.

Even more in detail, said seats are produced in the same number of annular edges 15 of the body 2 adapted to couple with the inner surface 8 of the sleeve 17.

In this way, the sleeve 7 can advantageously rotate about the body 2, enabling the mouths 11 and 12 of the coolant to be placed in the position most suitable for connection of the pipes.

For this purpose, the body 2 is provided with a locking element 42, such as a set screw or the like, placed at the end 2b and projecting from the outer surface.

Said set screw 42 acts as a stop to prevent axial translation of the sleeve 7, i.e. removal thereof from the body 2.

Alternatively, interlocking means (42), adapted to constrain axial translation of the sleeve (7) but at the same time to allow rotation thereof with respect to the body 2, are provided on the inner surface 8 of the sleeve 7 and on the annular edges 15. The device thus configured is simple and inexpensive to produce with respect to prior art devices.

The outer surface 6, the annular edges 15 and the seats 14 can in fact be produced in one piece (by casting) or by means of simple machining operations such as cylindrical turning.

Preferably, the sleeve 7 is made of plastic material so as to be injection molded (together with the mouths 11 and 12) without requiring further machining operations.

According to the invention said body 2 is modular in such a manner as to be able to arrange the reduction device in different configurations according to the user's needs.

For this purpose, one end 2a of the body 2 is provided with a removable cover 16 on which the outlet/outlets 4 for the low pressure gas is/are placed.

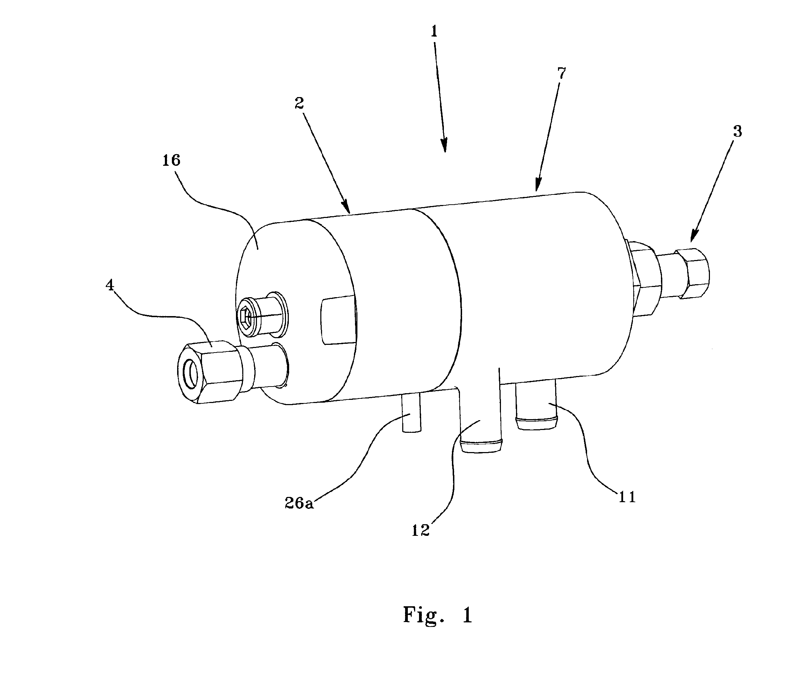

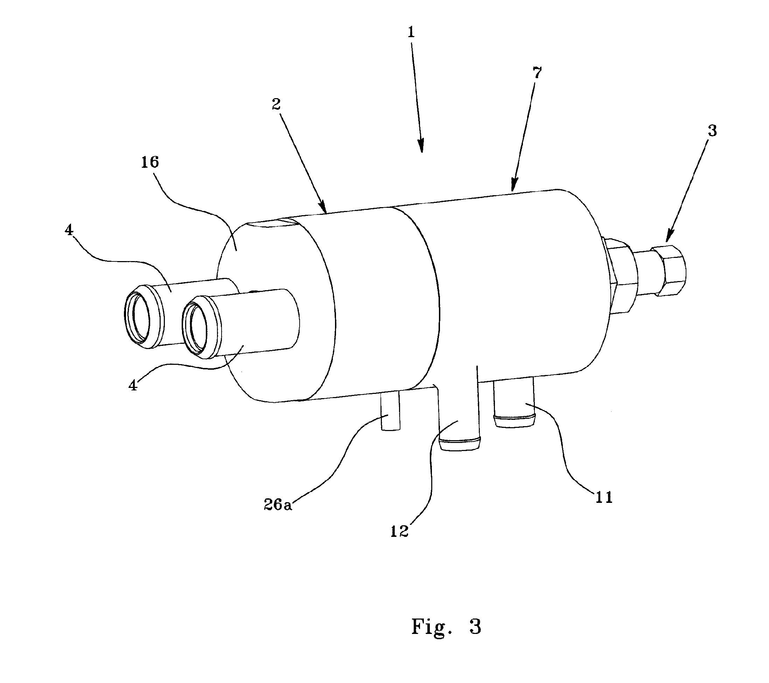

In this way, it is possible to equip the device with a cover with a different number of outlets 4 and a different arrangement of these outlets according to the type of motor to be fed (number of cylinders or their arrangement) as can be seen in Figs. 1, 3 and 4.

Preferably, said end 2a is substantially cylindrical shaped and is provided with a thread 17 adapted to couple with a corresponding thread 18 produced on the cover 16, also substantially cylindrical shaped.

The body 2 and the cover 16 are therefore mutually connected without the use of further components and without increasing the outer dimensions of the device.

Advantageously, the outside of the whole of the body 2 can be substantially cylindrically shaped in such a manner as to simplify as much as possible machining operations for its production (casting and machining with machine tools).

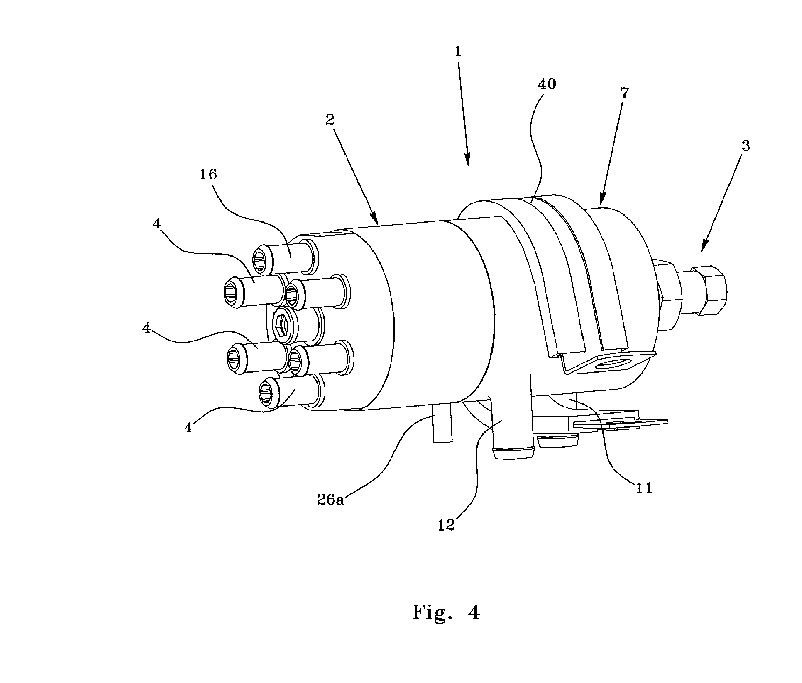

As a result of the regular shape, of its small dimensions, and consequently of its low weight, the device can be fastened in the engine compartment of the vehicle also by means of a simple metal or plastic strap 40 of adequate dimensions, without the need for supports produced specifically (Fig. 4).

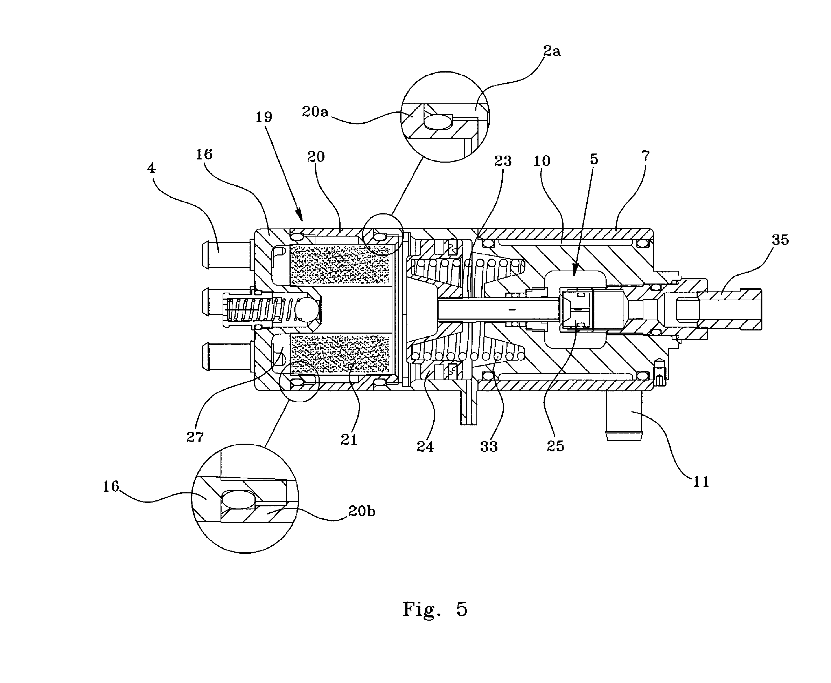

According to the invention, a filter element, indicated as a whole with 19, adapted to filter the low pressure gas destined to feed the injectors of the engine, can be interposed between said body 2 and said cover 16 (Fig.5).

In detail, said filter element comprises a tubular element 20 provided with two ends 20a and 20b substantially cylindrically shaped and both provided with a thread to couple respectively with the end 2a of the body and with the cover 16.

A first filter 21, for example made of fabric, metal sintered, adapted to capture any impurities still present in the gas, is inserted inside said tubular element 20.

As already mentioned, the valve 5 to lower the pressure and control the gas flow toward the motor is placed inside the body 2.

In detail, said valve comprises a duct 23, preferably cylindrical, movable toward or away from a shutter 25 mounted in a permanent position on the body 2.

Said shutter 25 and an end portion 23a of said duct 23 are housed in a first chamber 22 were the gas coming from the bottles or from the tank flows through a connector.

More in particular, said duct 23 is movable from a valve closed position in which the end 23a contacts a stop surface 31 of the shutter 25 and prevents the passage of gas therein, to a valve open position in which said end 23a is spaced from said shutter and allows the passage of a certain gas flow from the chamber 22, and vice versa from a valve closed to a valve open position.

Said duct 23 is mounted integral on a piston 24, slidable on the inner walls of the body 2, which controls translation from said valve closed position to said valve open position and vice versa.

A second chamber 26 and a third chamber 27 are defined at the respective sides of said piston 24.

In detail, the second chamber 26 is in communication with the ambient pressure through a hole 26a and separated from the first chamber by a wall 28 provided with an opening inside which the duct 23 runs.

Sealing means 30 are provided between the surface of said opening and the outer surface of the duct 23 to isolate the first chamber 22 and the second chamber 26. Instead, the third chamber 27 is in communication with the first chamber 22 by means of a duct 23 when this is in the valve open position, i.e. detached from the shutter 25.

Sealing means 32, adapted to isolate the second chamber 26 and the third chamber 27, are also provided on the peripheral edge of the piston 24.

Gas at (substantially constant) low pressure is present in the third chamber 27, which then flows through the outlet/outlets 4 toward the motor.

Said valve also comprises elastic means 33, acting on the piston 24, adapted to translate it toward the valve open position, i.e. to move the end 23a of the duct 23 away from the shutter 25.

Said elastic means comprise, for example, a coil spring interposed between the piston 24 and the wall 28 of the body 2.

Movement of the piston 24, and of the duct 23, is therefore controlled on one side by said coil spring 33 which exerts a constant force that tends to move the duct 23 away from the shutter 25 and on the other by the force exerted by the low pressure gas inside the third chamber 27, which acts on the opposite surface of the piston, and which tends to move the end 23a of the duct toward the surface of the shutter toward the valve closed position.

Reduction and regulation of the pressure takes placed as a result of the high load losses to which the gas flow is subjected during passage between the stop surface 31 of the shutter and the end 23a of the duct 23 toward the third chamber 27. When the motor requires an increased amount of fuel (for example during acceleration) there is an increase in the gas flow exiting from the third chamber 27, with consequent lowering of the pressure therein.

This decrease in pressure causes a decrease of the force exerted by the gas on the piston 24 in opposition with the force exerted by the spring 33.

In this way, the piston 24 translates moving the duct 23 away from the shutter 25 causing an increase in the pressure and in the gas flow that flows therein toward the third chamber 27.

The pressure in the third chamber increases until the gas pressure force once again balances the force of the spring 33.

Advantageously, according to the invention the shutter 25 of the valve 5 is mounted in a permanent position and the duct 23 is movable, contrary to other prior art solutions.

This makes it possible to minimize the movable surfaces on which the high pressure gas acts (in the first chamber 22), and in particular the movable surfaces not parallel to the direction of translation of the movable components of the valve. In fact, as these surfaces are subject to a very high pressure (when the tank or the bottles are full) they generate pressure forces proportional to the extension of said surfaces, often very high.

During emptying of the bottles or tanks, this high pressure starts to decrease, reducing the intensity of these forces (especially in the use of methane gas) up to less than a twentieth of their initial maximum value.

In the case in which these surfaces are considerably large, they generate forces with a difference in intensity between the maximum value (with full bottles or tanks) and minimum value (with empty bottles and tanks) that is difficult to control. In particular, it is difficult to cancel the effect on the movement of the valve which ideally should depend only on the variation of pressure in the low pressure chamber, i.e. the variation controlled by fuel demand of the motor.

Instead, in the device according to the invention, the only movable surface not parallel to the direction of translation is formed by the front surface of the duct 23. Moreover, the surface 31 of the shutter has a conical shape in such a manner as to contact the end 23a of the duct 23 along an ideal outer circumference with infinitesimal surface.

In this way, when the valve is closed the front surface of the duct is not subject to high pressure, therefore no force is generated.

As this thickness is very low, even less than 1 mm, in the case of a deformation of the surface 31 of the shutter 25 in the contact area (and therefore with the possibility of high pressure acting on the front surface of the duct 23) the difference in forces generated has practically no influence on the translation movement of the duct 23 and therefore on regulation of the low pressure. Preferably, said surface 31 of the shutter 31 is made of a synthetic material (such as reinforced polyamide or the like) which is resistant to the corrosive agents of fuels, which guarantees adequate mechanical resistance and which maintains its rigidity as constant as possible when the temperature varies and for a high number of contact cycles.

Advantageously, said shutter 25 is placed on an insert 35 placed at one end 2b of the body in a removable manner, preferably connected by means of a thread 36 or the like.

A second filter 37 can be placed inside the insert, adapted to filter any impurities from the gas before it enters the body 2 and in particular the valve 5.

In this way, it is possible to replace the second filter 37 and the shutter 25 (i.e. the elements subject to greater wear) simply by removing the insert 35 from the body 2, leaving the device installed in the engine compartment.

In the same way, the first filter 21 can also be replaced by removing only the tubular element 20 and the cover 16 from the body 2.

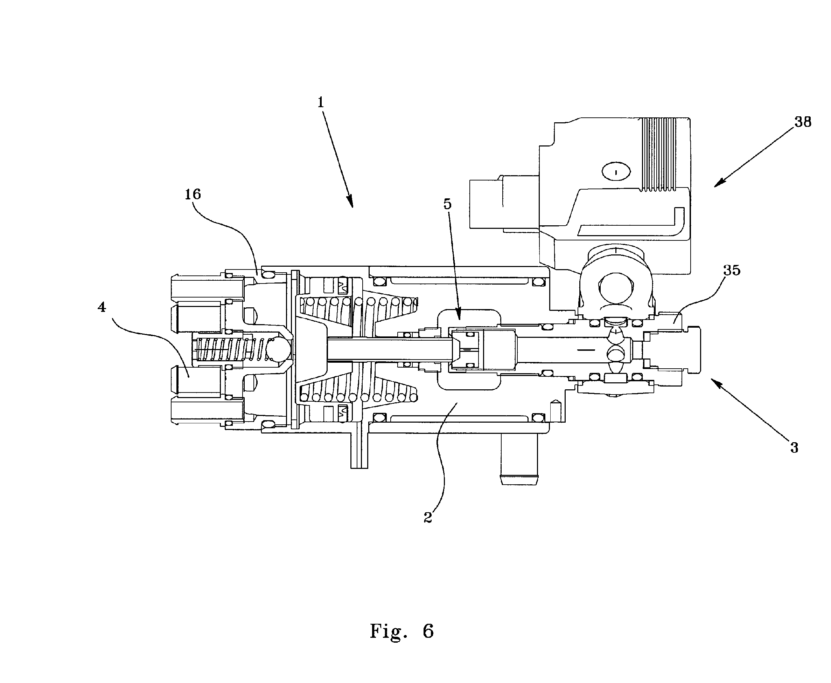

Said insert 35 advantageously acts as inlet connector 3 for connection of the high pressure gas pipe or for connection of a solenoid safety valve unit 38 (Fig. 6).

The present invention, as described and illustrated, is susceptible to numerous modifications and variants all included in the scope of the inventive concept; moreover, all details can be substituted by other technically equivalent elements.

## Claims

1. A device for feeding motors with a gaseous fuel, comprising a body (2) with at least one inlet (3) for a high pressure gaseous fuel and at least one outlet (4) of said fuel at low pressure, at least one valve (5) housed inside said body adapted to take the fuel from said high pressure to said low pressure, said body (2) having at least one portion with a substantially cylindrical shaped outer surface (6), at least one cylindrical sleeve (7) placed around the body (2) on said outer surface (6) in such a manner as to provide a chamber (10) for circulation of a heat-carrying fluid between said body (2) and said sleeve (7).

2. The device according to claim 1, **characterized in that** sealing means (13), adapted to guarantee tight seal of the chamber (10), are provided between said sleeve (7) and said body (2).

3. The device according to any one of the preceding claims, **characterized in that** said body (2) and said sleeve (7) are provided with means (42), adapted to constrain axial translation of the sleeve (7) but at the same time allow rotation thereof with respect to the body (2).

4. The device according to any one of the preceding claims, **characterized in that** at one end (2a) said body is provided with a removable cover (16) on which said at least one outlet (4) is produced, said end (2a) and said cover (16) being substantially cylindrical in shape and each being provided with a thread (17, 18) for mutual coupling thereof.

5. The device according to any one of the preceding claims, **characterized in that** a filter element (1), comprising a tubular element (20) containing a first filter (21), is placed between said body (2) and said cover (16), said tubular element (20) having ends (20a, 20b) substantially circular in shape provided with a thread to couple respectively with the end (2a) of the body (2) and the cover (16).

6. The device according to any one of the preceding claims, **characterized in that** said valve (5) comprises a duct (23) movable toward or away from a shutter (25) mounted in a permanent position on the body (2), from a valve closed position to a valve open position and vice versa.

7. The device according to claim 6, **characterized in that** said shutter (25) is placed on an insert (35) placed at one end (2b) of the body (2) in a removable manner and connected thereto by means of a thread (36) or the like.

8. The device according to claim 7, **characterized in that** said insert (35) forms the inlet connector (3) for the high pressure fuel, said insert containing a second filter (37).

9. The device according to claim 6, **characterized in that** said shutter (25) and one end (23a) of the duct (23) are housed in a first high pressure chamber (22), said duct (23) being mounted integral with a piston (24) slidable on inner walls of the body (2), said piston defining at the respective sides a second chamber (26) at ambient pressure and a third chamber (27) in connection with the outlet (4) of the fuel at low pressure, said second chamber (27) and said first chamber (22) being separated by a wall (28) provided with an opening, inside which the duct (23) runs, said piston (249 being subject on one side to the action of elastic means (33) adapted to carry the valve to the open position and on the other to the thrust of the gaseous fuel at low pressure present in the third chamber (27).

10. The device according to claim 6, **characterized in that** said shutter (25) is provided with a conical shaped stop surface (31), adapted to come into contact with the end (23a) of the duct (23).
